# EUROPEAN PATENT SPECIFICATION

(11) **EP 2 894 333 B1**
(45) Date of publication and mention of the grant of the patent: **06.09.2017**
(21) Application number: 13808433.0
(22) Date of filing: 30.04.2013
(51) Int. Cl.: F04B 35/04, F04B 39/12, F04B 39/14, F04C 29/00, H02K 21/24, H02K 5/22, H02K 7/14, H02K 16/04, H02K 11/215, F04C 18/344

(54) **MOTOR COMPRESSOR**
MOTORVERDICHTER
MOTOCOMPRESSEUR

(30) Priority: 29.06.2012 JP 2012146593
(43) Date of publication of application: 15.07.2015
(73) Proprietor: Valeo Japan Co., Ltd., Saitama 360-0193 (JP)
(72) Inventor: KISO, Norikatsu, Kumagaya-shi Saitama 360-0193 (JP); MINOWA, Masakatsu, Kumagaya-shi Saitama 360-0193 (JP)
(74) Representative: Tran, Chi-Hai
(86) International application number: PCT/JP2013/062533
(87) International publication number: WO 2014/002608

(56) References cited:
- DE-A1- 10 258 362
- JP-A- H05 328 690
- JP-A- 2008 150 962
- JP-A- 2008 172 918
- JP-A- 2008 172 918
- JP-A- 2008 295 211
- JP-U- H 031 729
- US-A1- 2009 160 392
- US-A1- 2009 160 392

## Description

### Technical Field

The present invention relates to an electric compressor used in a refrigerating cycle or the like of a vehicle air conditioning apparatus and, more specifically, to an electric compressor employing a motor of an axial gap type housed in a housing as a drive source.

### Background Art

In the related art, as an electric compressor of this type, a configuration described in Patent Literature 1 given below is publicly known.

This electric compressor includes a sealed container, a compressing mechanism portion arranged in the sealed container, and an axial gap type motor arranged on a low pressure side in the sealed container and configured to drive the compressing mechanism portion via a rotating shaft. The axial gap type motor used in this compressor includes a rotor fixed to a shaft, a first stator and a second stator arranged so as to oppose each other on both sides in an axial direction of the rotor via an air gap interposed therebetween.

Each of the stators consists of a stator core and an exciting coil, and the stator core is provided with a disc-shaped back yoke and a plurality of teeth provided so as to extend upright from the back yoke toward the rotor at predetermined intervals in a circumferential direction, and a 3-phase exciting coil is wound around an outer peripheral surface of the teeth. An electric motor comprising a rotor, a first and a second stator fixed to a first and a second housing member is shown in US 2009/0160392 A1. The first and second stators have a first and second air gap located between the first and the second stators and the rotor.

### Cited Reference

### Patent Literature

PTL1: JP-A-2008-172918

### SUMMARY

### Technical Problem

In this manner, the axial gap type motor provided with stators on both sides of the rotor in the axial direction is configured provided that an electric current of the same phase is flowed to exciting coils of the respective stators in order to encourage a smooth rotation of the rotor. Therefore, the exciting coils of the respective stators need to be connected in series from a power source.

In the configuration of the related art described above, in the case where a subassembly composed of the compressing mechanism portion, the first stator, the rotor having the shaft inserted therethrough, and the second stator assembled in advance is assembled into the sealed container, a member configured to specify the relative position thereof with respect to each other in advance is necessary. Therefore, the structure becomes complex, and flexibility in handling of respective components may be disadvantageously impaired.

In the case where the respective components are assembled in sequence, since the first stator and the second stator are disposed on both sides of the rotor in the axial direction, the respective stators need to be mounted on the sealed container in sequence while securing a sufficiently long additional length of a lead wire for connecting the both stators. Therefore, an excessively long lead wire is required, and the long lead wire may be damaged at the time of assembly or at the time of operation by friction with respect to other portions.

In view of such circumstances, it is a main object of the invention to provide an electric compressor having a simple structure to enhance flexibility in handling components, and having no probability of damage of a lead wire by eliminating necessity of securing an additional length of the lead wire of a stator.

### Solution to Problem

This is done by the invention as defined in the attached claims. In order to achieve the above-described problem, an electric compressor of the invention includes: a housing; a shaft rotatably supported in the housing; an axial gap type motor housed in the housing, and including a rotor fixed to the shaft, and a first stator and a second stator arranged at both axial end surfaces of the rotor so as to oppose each other via air gaps interposed therebetween; and a compressing mechanism configured to be driven by the motor, and is characterized in that the housing is configured to have a first housing member to which the first stator is fixed and a second housing member to which the second stator is fixed, and the first stator and the second stator each have an independent lead wire, and the lead wires are electrically coupled to each other in an interior of the housing.

Therefore, since the first stator and the second stator each include the independent lead wire, and the lead wires are electrically coupled to each other in the interior of the housing, the first housing member to which the first stator is mounted and the second housing member to which the second stator is mounted may be treated independently with each other, and the lead wire does not need to secure an additional long length. Therefore, a fear of damage of the excessively long lead wire is avoided.

A connector is provided at each of an end of the lead wire of the first stator and an end of the lead wire of the second stator, and the electric coupling between the first stator and the second stator is achieved by connecting the connectors each other.

With the configuration as described above, the respective lead wires may be electrically coupled by assembling the connectors in the interior of the housing at the time of assembly of the first housing member and the second housing member. Therefore, assembly work is facilitated.

Preferably, these connectors are positioned in the interior of the corresponding housing members, respectively.

By positioning the respective connector in the interior of the corresponding housing member, the assembly of the connector with each other may be achieved simultaneously with the assembly of the first housing member and the second housing member.

As a configuration of the positioning of the connectors in the housing members, direct fixation to the corresponding housing member and fixation to the corresponding stator are both possible.

With the former configuration, since the connectors are fixed to the housing in addition to the fixation of the stator to the housing, assembly flexibility may be enhanced. With the latter configuration, the connector can be positioned with respect to the housing member when the stator is fixed to the housing member simultaneously. Therefore, the assembly work is facilitated.

More specifically, the first and second housing members include joint end surfaces which are to be joined with each other, and one of the connectors includes a connecting projection, the other one of the connectors includes a connecting depression to which the connecting projection fits, and by joining the both joint end surfaces of the first housing member and the second housing member, the joining of the housing members and connecting of the connecting projection and the connecting depression of the connectors are achieved simultaneously.

In this configuration, since the respective connectors are joined simultaneously with the assembly of the housing member, the assembly work may be achieved easily and efficiently. In addition, since fitting between the connecting projection and the connecting depression of the connectors starts before the joint between the joint surfaces of the housing members, even though one of the housing members is attracted by a magnetic force of the rotor, sudden hitting at the joint between the housings can be avoided.

In a configuration where an inverter equipment is integrated with the compressor, it may be achieved by providing the inverter equipment on the first housing member, connecting the first stator to the inverter equipment, and connecting the second stator to the inverter equipment via the first stator (connecting the first stator and the second stator in series with respect to the inverter).

In this configuration, laying of the lead wire on an outer surface of the housing is eliminated, and hence a probability of damage of the lead wire is avoided.

### Advantageous Effects of Invention

As described thus far, according to the electric compressor of the present invention, since the axial gap motor as a drive source of the compressor is configured to have the rotor fixed to the shaft and the first stator and the second stator arranged on the both axial end surfaces of the rotor so as to oppose each other via the air gaps interposed therebetween, the housing is configured to have the first housing member to which the first stator is fixed and the second housing member to which the second stator is fixed, and the first stator and the second stator each have an independent lead wire, and the respective lead wires are electrically coupled to each other in the interior of the housing, the first housing member to which the first stator is mounted and the second housing member to which the second stator is mounted may be handled independently. The additional length of the lead wire does not need to be secured to be long, and a probability of damage of the lead wire is eliminated.

### Brief Description of Drawings

[Fig. 1] Fig. 1 is a drawing illustrating a general configuration of an electric compressor according to the present invention, in which (a) is a side cross-sectional view, and (b) is a cross-sectional view taken along the line A-A in (a) .
[Fig. 2] Figs. 2(a-1) to (a-3) illustrate a state in which a first stator is housed in a front-side housing member (first housing member), in which (a-1) is a side cross-sectional view thereof, (a-2) is a drawing of (a-1) viewed from the front side, and (a-3) is a drawing of (a-1) viewed from the rear side. Figs. 2(b-1) to (b-2) illustrate a state in which a second stator is stored in a rear-side housing member (second housing member), and (b-1) is a side cross-sectional view thereof, and (b-2) is a drawing of (b-1) viewed from the front side.
[Fig. 3] Fig. 3 is an exploded perspective view of the electric compressor according to the present invention.
[Fig. 4] Figs. 4 (a-1) to (a-4) illustrate a front-side stator (first stator), in which (a-1) is a side view thereof, (a-2) is a drawing of (a-1) viewed from the front side, (a-3) is a drawing of (a-1) viewed from the rear side, and (a-4) is a drawing of (a-1) viewed from above. Figs. 4(b-1) to (b-3) illustrate a rear side stator (second stator), in which (b-1) is a side view thereof, (b-2) is a drawing of (b-1) viewed from the front side, and (b-3) is a drawing of (b-1) viewed from above.
[Fig. 5] Fig. 5(a) is a perspective view illustrating a state before the stator is assembled to the housing member, and Fig. 5(b) is a perspective view illustrating a state in which the stator is assembled to the housing member.
[Fig. 6] Fig. 6 is a conceptual drawing illustrating the electric compressor of the present invention, and is a drawing illustrating a terminal and a connector used in the compressor.
[Fig. 7] Fig. 7 is a drawing illustrating a mounting state of the connector of the electric compressor of the invention, and is a partly exploded cross-sectional view from which the stator and the rotor in the interior of the housing are omitted.
[Fig. 8] Fig. 8 is a drawing illustrating other example of a connector mounting structure, and Figs. 8 (a-1) to (a-3) illustrate the front-side stator (first stator), in which (a-1) is a side view thereof, (a-2) is a drawing when viewing (a-1) from the rear side, and (a-3) is a perspective view thereof. Figs. 8 (b-1) to (b-3) illustrate the rear side stator (second stator), in which (b-1) is a side view thereof, (b-2) is a drawing of (b-1) viewed from the front side, and (b-3) is a perspective view thereof.

### Description of Embodiments

Referring now to the drawings, an electric compressor of the present invention will be described below.

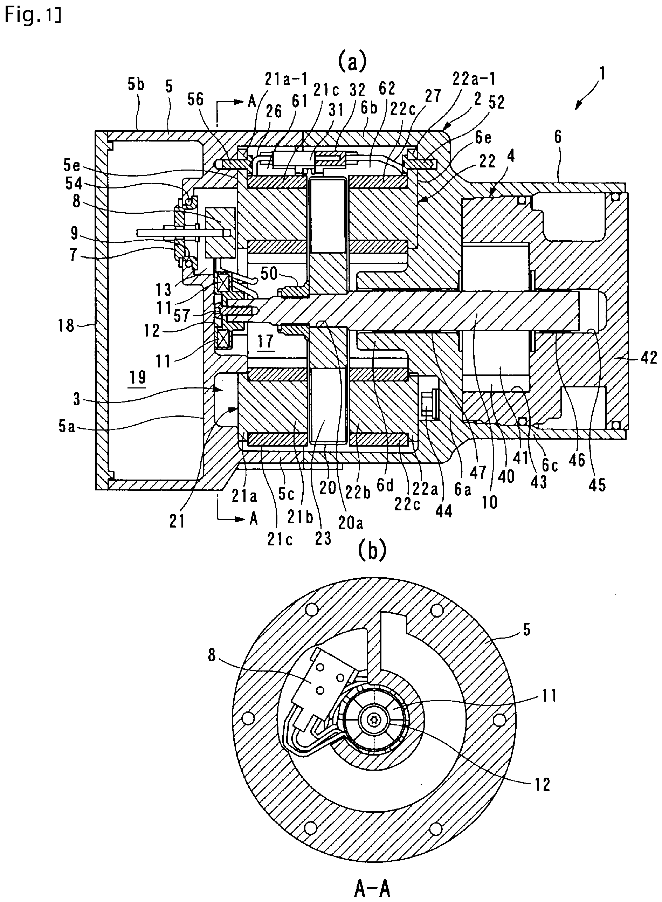

In Fig. 1, an electric compressor 1 is used for a refrigerating cycle using coolant as a working fluid for example, and includes an axial gap type motor 3 on the left side in the drawing in a housing 2 formed of aluminum alloy, and a compressing mechanism 4 driven by the motor 3 on the right side in the drawing. In Fig. 1, the left side of the drawing corresponds to the front of the electric compressor 1 in Fig. 1, and the right side of the drawing corresponds to the rear side of the compressor.

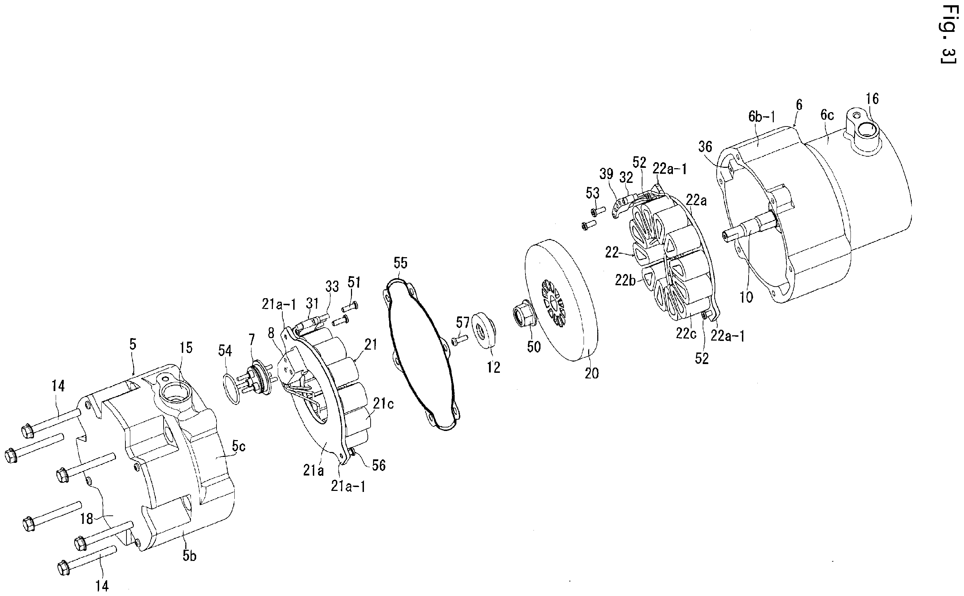

The housing 2 in this example consists of a first housing member 5 on the front side and a second housing member 6 on the rear side, and the two housing members 5, 6 are tightened by bolts 14 (shown in Fig. 3) in an axial direction.

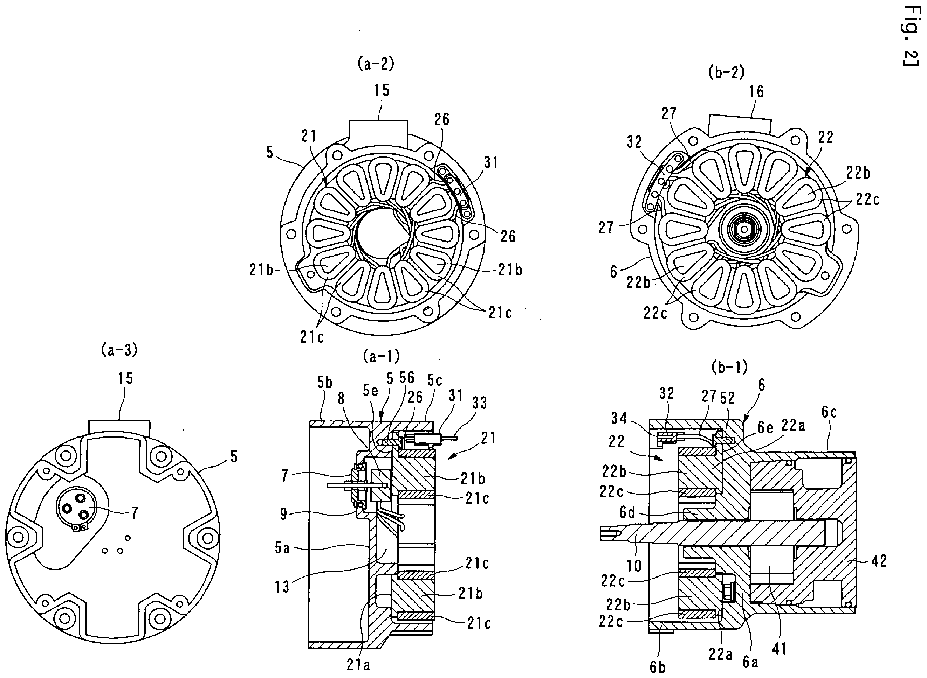

The first housing member 5 has a cylindrical shape having a partitioning wall 5a formed at the middle therein as illustrated in Fig. 2 as well, an inverter housing cylindrical portion 5b opening at a front end formed on the front side of the partitioning wall 5a, and a motor housing cylindrical portion 5c opening at a rear end formed on the rear side of the partitioning wall 5a. The partitioning wall 5a includes a thrust surface 5e for restricting an axial position of a back yoke 21a of a first stator 21 described later,a terminal mounting hole 9 on which a terminal 7 consisting of a hermetic terminal is mounted, and a depression 13 formed so as to continue from the terminal mounting hole 9 and configured to dispose a cluster 8 to be mounted on the terminal 7 and dispose a rotating body 12 provided with a detection magnet 11 which constitutes part of a position detecting sensor fixed to a distal end of a shaft 10 with screws or the like. The motor housing cylindrical portion 5c is formed with a inlet port 15 (illustrated in Fig. 3, Fig. 5, and Fig. 7) configured to introduce the coolant to be compressed by a compressor 4.

The second housing member 6 has a cylindrical shape having a partitioning wall 6a formed at the middle therein, a motor housing cylindrical portion 6b opening at a front end formed on the front side of the partitioning wall 6a, and a compressing mechanism housing cylindrical portion 6c opening at a rear end formed on the rear side of the partitioning wall 6a. The partitioning wall 6a includes a thrust surface 6e for restricting an axial position of a back yoke 22a of a second stator 22 described later, and a boss portion 6d configured to support the shaft 10 in a penetrating state formed integrally therewith, and the compressing mechanism housing cylindrical portion 6c includes a discharge port 16 (illustrated in Fig. 3, Fig. 5, and Fig. 7) configured to discharge the coolant compressed by the compressing mechanism 4 formed therein.

The axial gap type motor 3 is housed in a motor housing space 17 defined by being surrounded by the partitioning wall 5a and the motor housing cylindrical portion 5c of the first housing member 5 and the partitioning wall 6a and the motor housing cylindrical portion 6b of the second housing member 6 when the first housing member 5 and the second housing member 6 are assembled. The compressing mechanism 4 is housed in the compressing mechanism housing cylindrical portion 6c of the second housing member 6. The motor housing space 17 communicates with the inlet port 15 (illustrated in Fig. 3, Fig. 5, and Fig. 7) formed in the motor housing cylindrical portion 5c of the first housing member 5, and constitutes part of a low pressure route configured to introduce the coolant into the compressing mechanism 4.

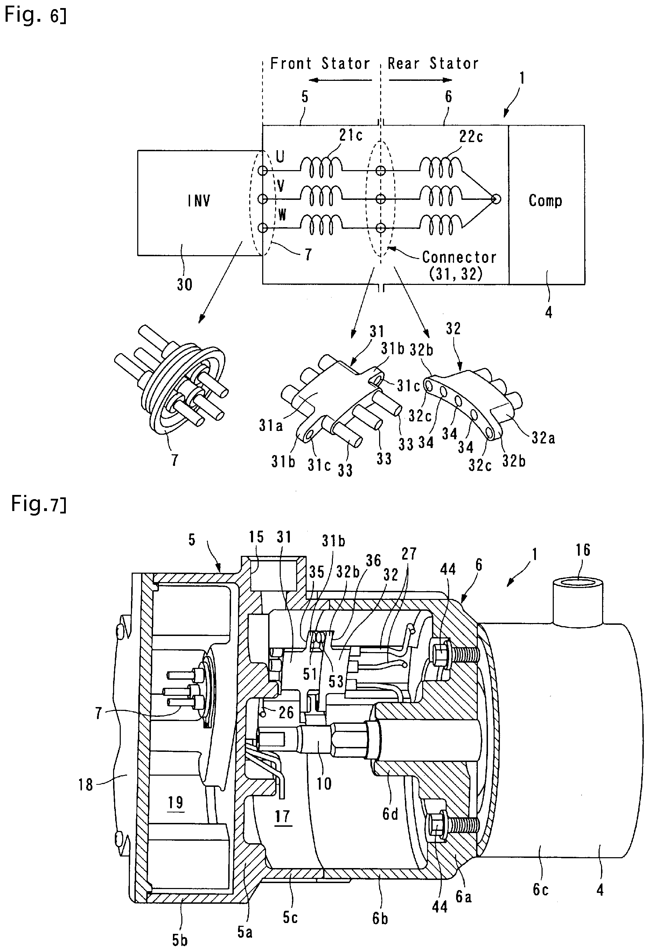

An inverter housing space 19 is defined by the partitioning wall 5a of the first housing member 5, the inverter housing cylindrical portion, and a lid member 18 configured to close an opening end of the inverter housing cylindrical portion, and an inverter equipment 30 (conceptually illustrated in Fig. 6) is housed in the inverter housing space 19.

The axial gap type motor 3 includes a disc-shaped rotor 20 fixed to the shaft 10, a first stator 21 arranged on the front side of the rotor 20 so as to oppose the rotor 20 via an air gap in the axial direction, and a second stator 22 arranged on the rear side of the rotor 20 so as to oppose the rotor 20 via an air gap in the axial direction as illustrated in Fig. 3.

The rotor 20 is provided with a plurality of rows of fan-shaped permanent magnets 23 arranged around a circumference, and includes a through hole 20a configured to allow the shaft 10 to be inserted at the center thereof.

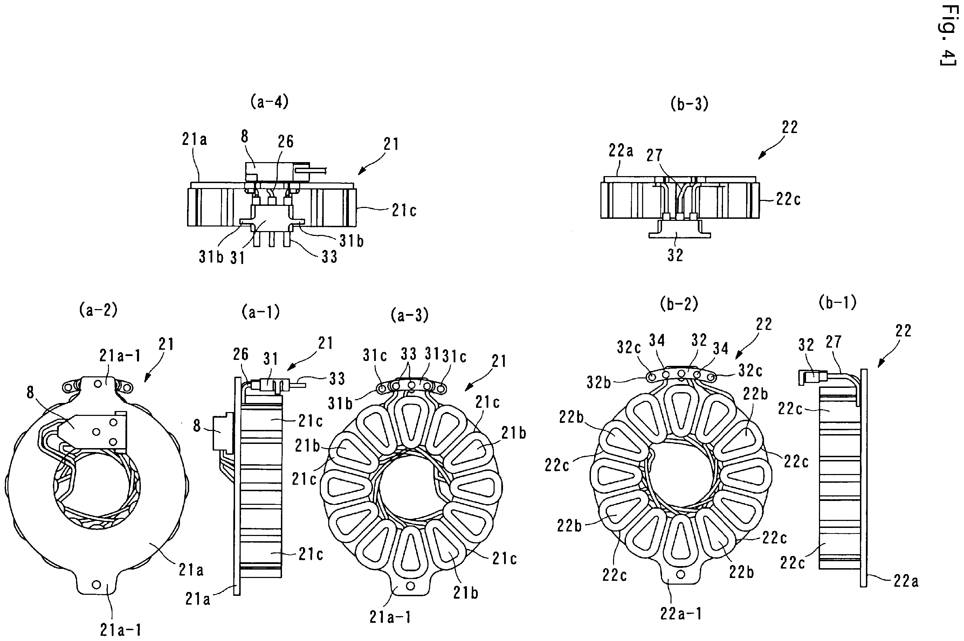

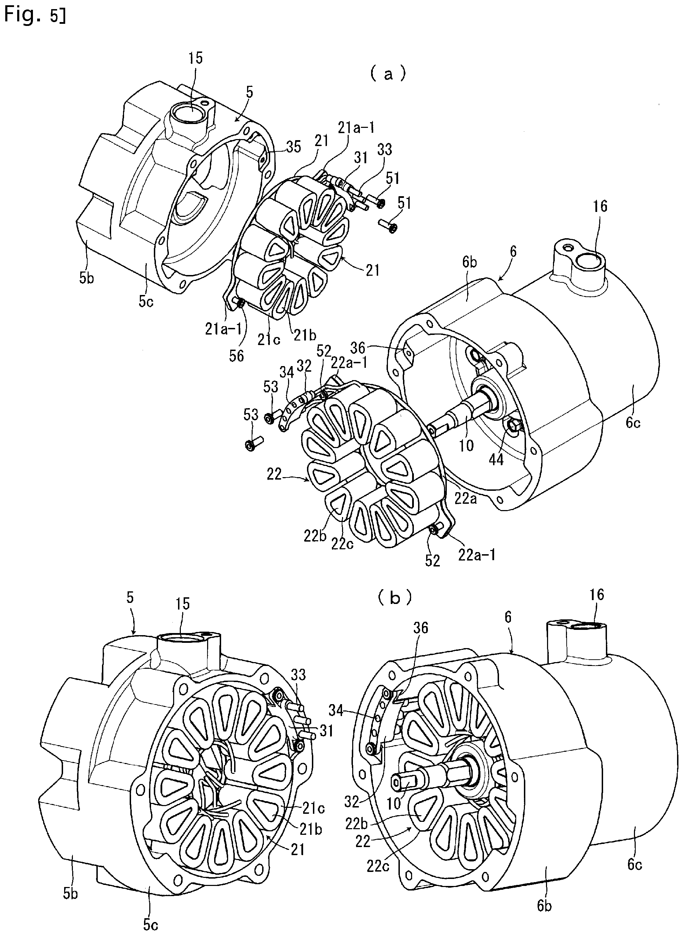

The first stator 21 and the second stator 22 include disc-shaped back yoke 21a and 22a formed of a magnetic body having a hole at a center thereof, a plurality of teeth 21b, 22b extending upright in the axial direction from the back yokes 21a, 22a toward the rotor and being disposed equidistantly in the circumference direction, and three-phase exciting coils 21c, 22c formed by being wound so as to allow insertion of the plurality of teeth 21b, 22b respectively as illustrated in Fig. 4 and Fig. 5.

The inverter equipment 30 housed in the inverter housing space 19 is connected to the exciting coil 21c of the first stator 21 via the terminal 7 provided on the partitioning wall 5a, and electrically connects a lead wire 26 drawn from the exciting coil 21c of the first stator 21 with a lead wire 27 drawn from the exciting coil 22c of the second stator 22. Therefore, the exciting coil 21c of the first stator 21 and the exciting coil 22c of the second stator 22 are connected in series with respect to the inverter equipment 30 as illustrated in Fig. 6, so that the current of the same phase is supplied thereto.

The respective stators 21, 22 are fixed by screwing screwing margin 21a-1, 22a-1 formed by extending part of the back yoke 21a and 22a so as to project radially outward to the thrust surfaces 5e, 6e of the corresponding housing members 5, 6.

The lead wire 26, 27 drawn from the exciting coils 21c, 22c of the stators 21, 22 are electrically connected to each other inside (within the motor housing space 17) of the housing and, in this example, a first connector 31 provided with a connecting projections 33 (for example, a round-pin shaped plug terminal) is provided at a distal end of the lead wire 26 drawn from the exciting coil 21c of the first stator 21, and a second connector 32 provided with a connecting depressions 34 (for example, a socket terminal which allows insertion and fitting of the plug terminal) which allows fitting of the connecting projection 33 in a press-fitted state is provided at a distal end of the lead wire 27 drawn from the exciting coil 22c of the second stator 22.

The respective connectors 31, 32 themselves are publicly known and, for example, the first connector 31 includes three connecting projections 33 arrayed linearly so as to correspond to three phase lines and projecting in parallel from the connector body 31a, a flange portion 31b projecting sideward is provided on a side surface of the connector body 31a, and the flange portion 31b is provided with through holes 31c so as to allow insertion of screws 51 (illustrated in Fig. 3) so as to fix the connector 31 to the flange portion 31b formed therethrough. In contrast, in the second connector 32, three connecting depressions 34 which allows fitting of the three connecting projections 33 are arrayed linearly so as to match pitches of the connecting projections 33, a flange portion 32b projecting sideward is provided on a side surface of a connector body 32a, and a through holes 32c which allow insertion of screws 53 (illustrated in Fig. 3) for fixing the connector to the flange portion 32b are provided.

The respective connectors 31, 32 are housed in gaps 61, 62 formed between the stators 21, 22 and the housing members 5, 6 on a side opposite to the side facing the thrust surfaces 5e, 6e of the screwing margin 21a-1, 22a-1 of the stators 21, 22, and are fixed to shouldered portions 35, 36 by the screws 51 and 53 formed on the corresponding housing members as illustrated also in Fig. 7. Accordingly, the respective connectors 31, 32 are positioned in the interior of the corresponding housing members 5, 6. In the state in which the housing members 5, 6 are assembled, the connectors 31, 32 are configured to be fitted to each other at a substantially the same joint surface as a joint surface between the housing members 5, 6.

The compressing mechanism 4 is, for example, of a vane type, and includes a compressor rotor 41 fixedly mounted at a predetermined position of the shaft 10 penetrating through the partitioning wall 6a and projecting into the compressing mechanism housing cylindrical portion 6c by press fitting, a cylinder member 42 fitting on the compressing mechanism housing cylindrical portion 6c of the second housing member 6 in the axial direction of the shaft 10, and configured to house the compressor rotor 41 in cooperation with the housing member 6, and a vane, which is not illustrated, slidably mounted on the compressor rotor 41, configured to come into sliding contact with an inner peripheral surface of the cylinder member 42, and define a compressing chamber 40.

The cylinder member 42 is provided with a rotor accommodation portion 43 configured to house the compressor rotor 41 on the front side, which corresponds to the distal end side of the insertion into the compressing mechanism housing cylindrical portion 6c, and is fixed to the second housing member 6 in the axial direction by screwing the bolt 44 from a motor housing space side (front side) in the axial direction via the partitioning wall 6a. The shaft 10 is inserted into a bearing hole 45 formed at a center of the cylinder member 42 at a rear side end thereof projecting from the compressor rotor 41, is rotatably supported by the bearing hole 45 via a plane bearing 46, and is rotatably supported by a portion which penetrate through the boss portion 6d via a plane bearing 47.

Therefore, the compressor rotor 25 is defined in axial position with respect to the housing 2 by the partitioning wall 5a of the first housing member 5 and the cylinder member 42, whereby the position of the shaft 10 with respect to the housing 2 in the axial direction is defined. In the state in which the compressing mechanism 4 is assembled, the axial position of the rotor 20 to be fixed to the shaft 10 with respect to the housing 2 is defined.

Such an electric compressor is configured to introduce coolant taken into the motor housing space 17 via the inlet port 15 to the compressing chamber 40 of the compressing mechanism 4 via a passage, which is not illustrated, formed in the partitioning wall 6a while cooling the motor 3, and compress and discharge the coolant taken in by the rotation of the compressor rotor 41 from the discharge port 16 via a discharge route, which is not illustrated.

In this configuration, in order to assemble the above-described electric compressor 1, first of all, the shaft 10 is press-fitted into the compressor rotor 41 to fix the compressor rotor 41 at a predetermined position of the shaft 10, the vane is inserted into a vane groove of the compressor rotor 41 and, in this state, the rear end of the shaft 10 to which the compressor rotor 41 is fixed is mounted in the bearing hole 45 of the cylinder member 42 via the plane bearing 46, the shaft 10 is inserted into the boss portion 6d of the partitioning wall 6a via the plane bearing 47 from the rear side of the second housing member 6, and the cylinder member 42 is fitted to the second housing member 6 in the axial direction.

Then, in order to hold this state, the bolt 44 is screwed into the cylinder member 42 through the partitioning wall 6a from the front side of the partitioning wall 6a, and the cylinder member 42 is fixed to the second housing member 6 (the partitioning wall 6a) in the axial direction.

After the compressing mechanism 4 has been assembled to the second housing member 6 in the manner as described above, the second stator 22 is inserted into the motor housing cylindrical portion 6b of the second housing member 6, and the screwing margin 22a-1 of the second stator 22 is fixed to the thrust surface 6e of the partitioning wall 6a with bolts 52, whereby the axial position is specified. Subsequently, the second connector 32 is inserted into gaps 62 between the second stator 22 and the second housing member 6 so as to cover the screwing margin 22a-1 of the second stator 22, and is fixed to the second housing member 6 with the screws 53, so that the position in the interior of the housing is specified.

The terminal 7 is mounted in the terminal mounting hole 9 of the first housing member 5 from the motor housing space 17 via a sealing member (0-ring) 54, and the cluster 8 connected to the exciting coil 21c of the first stator 21 is mounted on the terminal of the terminal 7 on the motor side.

By inserting the first stator 21 into the motor housing cylindrical portion 5c of the first housing member 5, and fixing the screwing margin 22a-1 of the first stator 21 to the thrust surface 5e of the partitioning wall 5a with bolts 56, the axial position is defined. Subsequently, the first connector 31 is inserted into the gap 61 between the first stator 21 and the first housing member 5 so as to cover the screwing margin 21a-1 of the first stator 21, and is fixed to the first housing member 5 with the screws 51, so that the position in the interior of the housing is specified.

Subsequently, the rotor 20 is fitted over the shaft 10 at a predetermined position, and is fixed in axial position by a nut 50 to be screwed into the shaft 10, and then the rotating body 12 of the position detecting sensor is fixed to the distal end of the shaft 10 by a screw 57.

Then, an opening end of the first housing member 5 to which the first stator 21 is attached is brought toward an opening end of the second housing member 6 to which the second stator 22 is attached while adjusting the position in the circumferential direction, and the opening ends of the housing members 5, 6 are abutted against each other so as to cover the rotor 20.

Accordingly, since the rotor 20 is arranged between the first stator 21 and the second stator 22 via a predetermined air gap, and the positions of the respective connectors 31, 32 are controlled by the corresponding housing members 5, 6, the first housing member 5 and the second housing member 6 are assembled to each other and the connecting projections 33 of the connector 31 are press-fitted into the connecting depressions 34 of the connector 32, whereby the lead wire 26 of the first stator 21 and the lead wire 27 of the second stator 22 are electrically connected to each other via the connectors 31, 32.

In the inverter housing space 19, the inverter equipment, which is not illustrated, is installed at a predetermined position, and a Hall element which constitutes part of the position detecting sensor is provided so as to face the rotating body 12 with the partitioning wall 5a interposed therebetween, and the cluster, which is not illustrated, of the inverter equipment 30 is connected to the terminal on the inverter side of the terminal 7. In Fig. 3, reference numeral 55 denotes a gasket which is to be placed between the first housing member 5 and the second housing member in the case of coupling these members.

Therefore, a supply of a three-phase current from the inverter equipment 30 is supplied to the exciting coil 21c of the first stator 21 via the terminal 7, and then is supplied from the lead wire 26 connected to the exciting coil 21c via the connectors 31, 32 and the lead wire 27 of the second stator 22 to the exciting coil 22c of the second stator 22.

In this manner, since the lead wire 26 to be connected to the first stator 21 and the lead wire 27 to be connected to the second stator 22 are electrically coupled to the interior of the housing simultaneously with the assembly of the first housing member 5 and the second housing member 6, the assembly work can be performed easily.

Therefore, since the first stator 21 and the second stator 22 include the independent lead wires 26, 27 respectively, handling of the first housing member 5 to which the first stator 21 is mounted and the second housing member 6 to which the second stator 22 is mounted may be treated independently with each other, and the lead wires 26, 27 only need the length to be connected to the connectors 31, 32. Therefore, an additional long length of the lead wire does not need to be secured.

Since the connectors 31, 32 are fixed to the housing members 5, 6 separately from the fixation of the respective stators 21, 22 to the housing members 5, 6, assembly flexibility is high, and since fitting between the connecting projections 33 of the first connector 31 and the connecting depressions 34 of the second connector 32 starts before the joint surfaces of the housing members 5, 6 join, even though one of the housing members is sucked by a magnetic force of the rotor 20, sudden joint collision between the housings can be avoided.

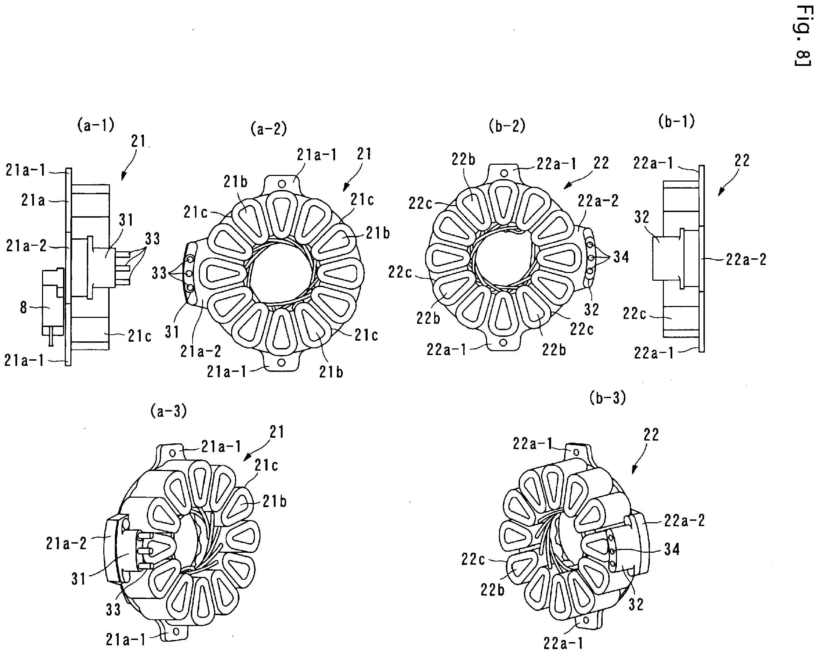

In the configuration described above, an example in which the connectors 31, 32 provided on the lead wires of the respective stators 21, 22 are fixed to the corresponding housing members 5, 6 is shown. However, a configuration in which a radially projecting connector fixing portion 21a-2 is provided on, for example, the back yoke 21a and 22a of the corresponding stators 21, 22, and the connectors 31, 32 are fixed to connector fixing portions 21a-2 and 22a-2 is also applicable as illustrated in Fig. 8. In this configuration, by fixing the stators 21, 22 to the housing members 5, 6, positioning of the connectors 31, 32 with respect to the housing members 5, 6 is achieved simultaneously, and hence the assembly work is further facilitated.

The configurations of the respective components which constitute the electric compressor are not limited to the configurations described above, and may be replaced by other configuration as well. For example, the example in which the screw 57 is employed as a device for fixing the rotating body 12 to the shaft 10 is shown. However, other fixing devices may be employed instead. Although the vane-type is exemplified as the compressing mechanism 4, a scroll type may also be employed.

### Reference Signs List

- 1: electric compressor
- 2: housing
- 3: motor
- 4: compressing mechanism
- 5: first housing member
- 6: second housing member
- 10: shaft
- 20: rotor
- 21: first stator
- 22: second stator
- 26, 27: lead wire
- 30: inverter equipment
- 31: first connector
- 32: second connector
- 33: connecting projection
- 34: connecting depression

## Claims

1. An electric compressor (1) comprising:
a housing (2); a shaft (10) rotatably supported in the housing 1; an axial gap type motor (3) housed in the housing (2), and including a rotor (20) fixed to the shaft (10), and a first stator (21) and a second stator (22) arranged at both axial end surfaces of the rotor (20) via air gaps interposed therebetween; and a compressing mechanism (4) configured to be driven by the motor (3),
wherein the first stator (21) and the second stator (22) each have an independent lead wire (26, 27), and the lead wires (26, 27) are electrically coupled to each other in an interior of the housing (2), **characterized in that** the housing (2) is configured to have a first housing member (5) to which the first stator (21) is fixed and a second housing member (6) to which the second stator (22) is fixed, and a connector (31, 32) is provided at each of an end portion of the lead wire (26) of the first stator (21) and an end portion of the lead wire (27) of the second stator (22), and the electric coupling between the first stator (21) and the second stator (22) is achieved by connecting the connectors (31, 32) each other.

2. The electric compressor (1) according to Claim 1, wherein the connectors (31, 32) are positioned in the interior of the corresponding housing members (5, 6), respectively.

3. The electric compressor (1) according to Claim 2, wherein the connectors (31, 32) are directly fixed to the corresponding housing members (5, 6), respectively.

4. The electric compressor (1) according to Claim 2, wherein the connectors (31, 32) are fixed to corresponding stators (21, 22), respectively.

5. The electric compressor (1) according to any one of Claims 2 to 4, wherein the first and second housing members (5, 6) include joint end surfaces which are to be joined with each other, and one of the connectors (31) includes a connecting projection (33), the other one of the connectors (32) includes a connecting depression (34) to which the connecting projection (33) fits, and
by joining the both joint end surfaces of the first housing member (5) and the second housing member (6), the joining of the housing members (5, 6) and connection of the connecting projection (33) and the connecting depression (34) of the connectors (31, 32) are achieved simultaneously.

6. The electric compressor (1) according to any one of Claims 1 to 5, wherein the first housing member (5) includes an inverter equipment (30), the first stator (21) is connected to the inverter equipment (30), and the second stator (22) is connected to the inverter equipment (30) via the first stator (21) .

## Patentansprüche

1. Elektrischer Kompressor (1), umfassend:
ein Gehäuse (2); eine Welle (10), die in dem Gehäuse 1 drehbar gelagert ist; einen Axialspaltmotor (3), der in dem Gehäuse (2) untergebracht ist und einen Rotor (20), der an der Welle (10) befestigt ist, und einen ersten Stator (21) und einen zweiten Stator (22) enthält, die an beiden axialen Endflächen des Rotors (20) über Luftspalte, die dazwischen angeordnet sind, angeordnet sind; und einen Verdichtungsmechanismus (4), der ausgelegt ist, von dem Motor (3) angetrieben zu werden, wobei
der erste Stator (21) und der zweite Stator (22) jeweils einen unabhängigen Leitungsdraht (26, 27) aufweisen und die Leitungsdrähte (26, 27) in einem Inneren des Gehäuses (2) elektrisch miteinander verbunden sind, **dadurch gekennzeichnet, dass** das Gehäuse (2) ausgelegt ist, ein erstes Gehäuseelement (5), an dem der erste Stator (21) befestigt ist, und ein zweites Gehäuseelement (6), an dem der zweite Stator (22) befestigt ist, aufzuweisen, und
ein Verbinder (31, 32) jeweils an einem Endabschnitt des Leitungsdrahts (26) des ersten Stators (21) und an einem Endabschnitt des Leitungsdrahts (27) des zweiten Stators (22) vorgesehen ist, und die elektrische Verbindung zwischen dem ersten Stator (21) und dem zweiten Stator (22) durch Verbinden der Verbinder (31, 32) miteinander erreicht wird.

2. Elektrischer Kompressor (1) nach Anspruch 1, wobei die Verbinder (31, 32) jeweils im Inneren der entsprechenden Gehäuseelemente (5, 6) positioniert sind.

3. Elektrischer Kompressor (1) nach Anspruch 2, wobei die Verbinder (31, 32) jeweils direkt an den entsprechenden Gehäuseelementen (5, 6) befestigt sind.

4. Elektrischer Kompressor (1) nach Anspruch 2, wobei die Verbinder (31, 32) jeweils an entsprechenden Statoren (21, 22) befestigt sind.

5. Elektrischer Kompressor (1) nach einem der Ansprüche 2 bis 4, wobei das erste und das zweite Gehäuseelement (5, 6) gemeinsame Endflächen enthalten, die miteinander zu verbinden sind, und einer der Verbinder (31) einen Verbindungsvorsprung (33) enthält, der andere der Verbinder (32) eine Verbindungsvertiefung (34) enthält, in die der Verbindungsvorsprung (33) passt, und
durch Verbinden der beiden gemeinsamen Endflächen des ersten Gehäuseelements (5) und des zweiten Gehäuseelements (6) das Verbinden der Gehäuseelemente (5, 6) und das Verbinden des Verbindungsvorsprungs (33) und der Verbindungsvertiefung (34) der Verbinder (31, 32) gleichzeitig erreicht werden.

6. Elektrischer Kompressor (1) nach einem der Ansprüche 1 bis 5, wobei das erste Gehäuseelement (5) eine Wechselrichterausrüstung (30) enthält, der erste Stator (21) mit der Wechselrichterausrüstung (30) verbunden ist und der zweite Stator (22) über den ersten Stator (21) mit der Wechselrichterausrüstung (30) verbunden ist.

## Revendications

1. Compresseur électrique (1), comprenant :
un boîtier (2) ; un arbre (10) supporté de façon rotative dans le boîtier 1 ; un moteur à entrefer axial (3) logé dans le boîtier (2), et incluant un rotor (20) fixé à l'arbre (10), et un premier stator (21) et un second stator (22) agencés sur les deux surfaces d'extrémité axiales du rotor (20) par l'intermédiaire d'entrefers interposés entre ceux-ci ; et un mécanisme de compression (4) configuré pour être entraîné par le moteur (3),
dans lequel
le premier stator (21) et le second stator (22) possèdent chacun un fil conducteur indépendante (26, 27), et les fils conducteurs (26, 27) sont électriquement couplés l'un à l'autre dans un intérieur du boîtier (2), **caractérisé en ce que**
le boîtier (2) est configuré pour comporter un premier organe de boîtier (5) auquel le premier stator (21) est fixé et un second organe de boîtier (6) auquel le second stator (22) est fixé, et
un connecteur (31, 32) est prévu à chacune d'une portion d'extrémité du fil conducteur (26) du premier stator (21) et d'une portion d'extrémité du fil conducteur (27) du second stator (22), et le couplage électrique entre le premier stator (21) et le second stator (22) est accompli en connectant les connecteurs (31, 32) l'un à l'autre.

2. Compresseur électrique (1) selon la revendication 1, dans lequel les connecteurs (31, 32) sont positionnés dans l'intérieur des organes de boîtier correspondants (5, 6), respectivement.

3. Compresseur électrique (1) selon la revendication 2, dans lequel les connecteurs (31, 32) sont directement fixés aux organes de boîtier correspondants (5, 6), respectivement.

4. Compresseur électrique (1) selon la revendication 2, dans lequel les connecteurs (31, 32) sont fixés à des stators correspondants (21, 22), respectivement.

5. Compresseur électrique (1) selon l'une quelconque des revendications 2 à 4, dans lequel les premier et second organes de boîtier (5, 6) incluent des surfaces d'extrémité de joint qui sont destinées à être jointes l'une à l'autre, et l'un des connecteurs (31) inclut une saillie de connexion (33), l'autre des connecteurs (32) inclut un creux de connexion (34) dans lequel la saillie de connexion (33) s'ajuste, et en joignant les deux surfaces d'extrémité de joint du premier organe de boîtier (5) et du second organe de boîtier (6), la jonction des organes de boîtier (5, 6) et la connexion de la saillie de connexion (33) et du creux de connexion (34) des connecteurs (31, 32) sont accomplies simultanément.

6. Compresseur électrique (1) selon l'une quelconque des revendications 1 à 5, dans lequel le premier organe de boîtier (5) inclut un équipement inverseur (30), le premier stator (21) est connecté à l'équipement inverseur (30), et le second stator (22) est connecté à l'équipement inverseur (30) par l'intermédiaire du premier stator (21).
